(19) Europäisches Patentamt
European Patent Office
Office européen des brevets

(11) **EP 3 219 491 A1**

(12) **EUROPEAN PATENT APPLICATION**

(43) Date of publication:
**20.09.2017 Bulletin 2017/38**

(51) Int Cl.:
**B33Y 50/02** (2015.01)

(21) Application number: **17160218.8**

(22) Date of filing: **10.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2016 JP 2016053548**

(71) Applicant: **Ricoh Company, Ltd.**
**Tokyo 143-8555 (JP)**

(72) Inventors:
• **YUJI, Yasuaki**
**Tokyo, 143-8555 (JP)**
• **MAEDA, Hiroshi**
**Tokyo, 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **INFORMATION PROCESSING APPARATUS, ADDITIVE MANUFACTURING SYSTEM, AND INFORMATION PROCESSING METHOD**

(57)    An information processing apparatus (20) provides data for manufacturing an object to an additive manufacturing apparatus (70) that manufactures the object by layering a material based on a cross-sectional shape of the object. The information processing apparatus (20) includes a shape change detection unit (23) for detecting a shape change coordinate at which a shape of the object changes based on data relating to the shape of the object, a cross-sectional shape generating position determination unit (24) for determining a height at which the cross-sectional shape of the object is to be generated such that the height includes the shape change coordinate; and a cross-sectional shape generation unit (25) for generating the cross-sectional shape of the object at the height determined by the cross-sectional shape generating position determination unit (24).

FIG.1

**Description**

**BACKGROUND OF THE INVENTION**

1. Field of the Invention

The present invention relates to an information processing apparatus, an additive manufacturing system, and an information processing method.

2. Description of the Related Art

Additive manufacturing apparatuses for manufacturing an object based on a 3D model having a three-dimensional shape represented by 3D data are known. Additive manufacturing apparatuses can produce prototypes and articles of a small lot at low cost and within a short delivery time. Although additive manufacturing apparatuses may implement various methods to manufacture 3D objects, they all perform the same basic process of stacking layers of material one on top of the other based on slice data of a 3D model (cross-sectional shape at a certain height of the 3D model) to produce a 3D object.

An additive manufacturing apparatus is primarily implemented by a printer that stacks layers of material one on top of the other to form an object, and software is used to instruct the additive manufacturing apparatus on the layering positions of the material. The software is executed by an information processing apparatus and typically has functions of interpreting 3D data representing a 3D model that has been prepared by a user and adjusting the orientation and arrangement of the 3D model. Also, the software has a function of generating slice data.

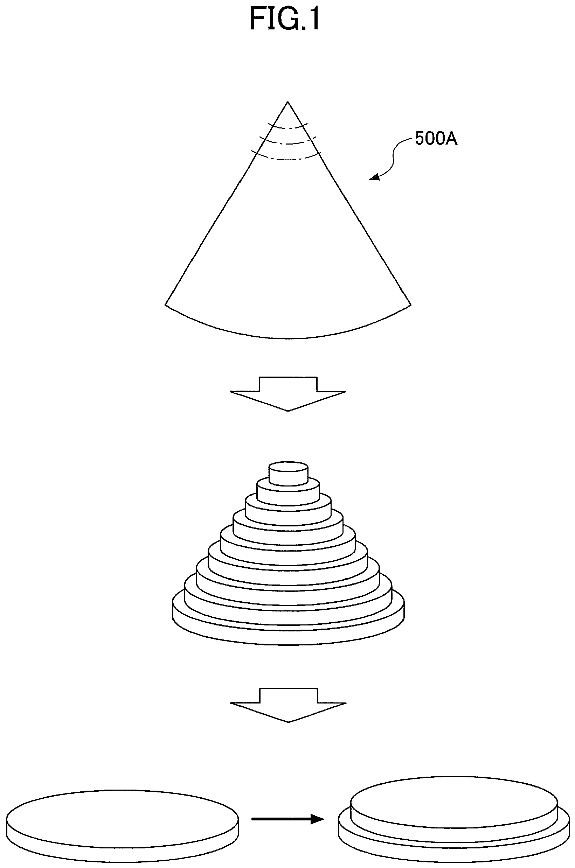

FIG. 1 is a diagram describing slice data. That is, FIG. 1 illustrates a 3D model 500A represented by 3D data (see top of FIG. 1) and how the 3D model 500A is sliced at predetermined layer thicknesses to obtain slice data of the 3D model 500A (see middle of FIG. 1). An additive manufacturing apparatus successively forms layers from the bottom based on slice data of bottom layers of the 3D model 500A as illustrated at the bottom of FIG. 1. In this way, a 3D object is manufactured by stacking one layer on top of the other from the bottom layers based on slice data.

Note that the thinner the layer thickness, the smoother the surface of the finished object but the longer it takes to manufacture the object. In this respect, a technique is known for allowing the layer thicknesses to be variable. For example, Japanese Unexamined Patent Publication No. H8-156108 describes an additive manufacturing apparatus that slices a 3D model at fixed layer thicknesses, compares contour shapes of consecutive slice layers, and combines the slice layers into one if the contour shapes match (i.e., regards a plurality of layers as a single layer if the contour shapes match). In this way, the number of slice data used for forming a 3D object may be reduced and the manufacturing time can be reduced.

However, in the additive manufacturing apparatus described in Japanese Unexamined Patent Publication No. H8-156108, when the contour shapes of the consecutive slice layers do not match, the slice data may not accurately represent the 3D model. When the slice data does not accurately represent the 3D model, accuracy of the 3D object manufactured based on the slice data is also degraded.

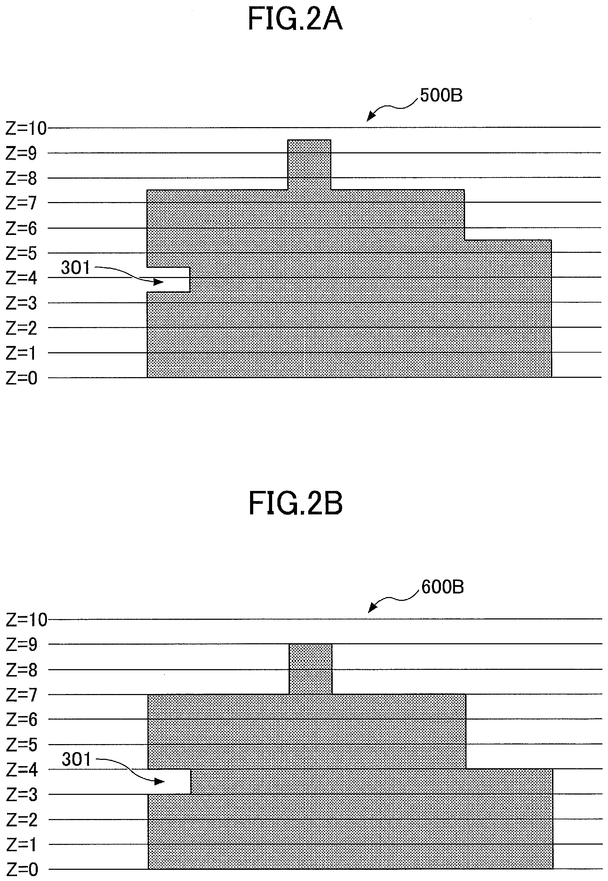

In the following, the above problem is described with reference to FIGS. 2A and 2B. FIGS. 2A and 2B illustrate an example case where slice data does not accurately represent a 3D model. FIG. 2A illustrates a 3D model 500B, and FIG. 2B illustrates a manufactured object 600B that has been manufactured based on slice data of the 3D model 500B. Note that the plurality of horizontal lines in FIG. 2A represent slice positions, and a layer immediately below a given slice position is formed based on slice data of this slice position. In FIG. 2A, the contour shape of the 3D model 500B changes between slice positions Z=3 and Z=4. However, the layer immediately below the slice position Z=4 is formed based on slice data of the slice position Z=4. Thus, the shape change occurring between the slice positions Z=3 and Z=4 is not reflected in the slice data representing the 3D model 500B. The same applies to the shape change occurring in the layer between slice positions Z=4 and Z=5. Thus, as illustrated in FIG. 2B, the manufactured object 600B manufactured based on the slice data of the 3D model 500B differs from the actual shape of the 3D model 500B (e.g., the position of a recess 301 is shifted downward). The same applies to a shape change occurring between slice positions Z=5 and Z=6 and a shape change occurring between slice positions Z=7 and Z=8. That is, when a shape change occurs between slice positions, a variation is created between the shape of the 3D model and the shape of the object formed based on the slice data of the 3D model.

Also, when the height of the 3D model 500B cannot be evenly divided by the layer thickness, a thickness corresponding to the division remainder may not be formed such that the shape of the original 3D model 500B cannot be accurately reflected in the manufactured object 600B (the height of the manufactured object 600B is reduced). That is, a cross-sectional shape is not detected at slice position Z=10, and as a result, the shape of the 3D model 500B between slice positions Z=9 and Z=10 is not reflected in the manufactured object 600B.

As described above, when slice positions are equidistant and contour shapes of consecutive slice layers do not match with each other, variations are created between the shape of a 3D model and the shape of an object manufactured based on slice data of the 3D model. In other words, manufacturing accuracy of the manufactured object is degraded.

In view of the above problems, it is an object of the present invention to provide an information processing apparatus that is capable of manufacturing an object with accuracy.

## SUMMARY OF THE INVENTION

According to one embodiment of the present embodiment, an information processing apparatus (20) provides data for manufacturing an object to an additive manufacturing apparatus (70) that manufactures the object by layering a material based on a cross-sectional shape of the object. The information processing apparatus (20) includes a shape change detection unit (23) for detecting a shape change coordinate at which a shape of the object changes based on data relating to the shape of the object, a cross-sectional shape generating position determination unit (24) for determining a height at which the cross-sectional shape of the object is to be generated such that the height includes the shape change coordinate; and a cross-sectional shape generation unit (25) for generating the cross-sectional shape of the object at the height determined by the cross-sectional shape generating position determination unit (24).

## BRIEF DESCRIPTION OF THE DRAWINGS

FIG. 1 is a diagram illustrating generation and application of slice data;
FIGS. 2A and 2B are diagrams illustrating an example case where slice data cannot accurately represent a 3D model;
FIGS. 3A and 3B are diagrams illustrating examples of feature planes, feature layers, and slice data;
FIG. 4 is a diagram illustrating an example configuration of an additive manufacturing system;
FIG. 5 is a diagram illustrating an example hardware configuration of an information processing apparatus;
FIGS. 6A and 6B are diagrams illustrating an example hardware configuration of an additive manufacturing apparatus;
FIG. 7 is a diagram illustrating an example functional configuration of the additive manufacturing system including the information processing apparatus and the additive manufacturing apparatus;
FIGS. 8A and 8B are diagrams illustrating generation of slice data and print data (G code);
FIGS. 9A and 9B are diagrams illustrating a method of determining a feature plane;
FIG. 10 is a flowchart illustrating an example process of a feature plane determination unit determining a feature plane;
FIG. 11 is a flowchart illustrating an example process of a slice position determination unit determining a slice position;
FIG. 12 is a diagram illustrating an example 3D model in the shape of a triangular pyramid;
FIG. 13 is a flowchart illustrating another example process of the feature plane determination unit determining a feature plane;
FIG. 14 is a diagram illustrating an example manner of determining a feature plane; and
FIGS. 15A and 15B are diagrams illustrating examples of print data according to varying layer thicknesses.

## DESCRIPTION OF THE PREFERRED EMBODIMENTS

In the following, embodiments of the present invention are described with reference to the accompanying drawings.

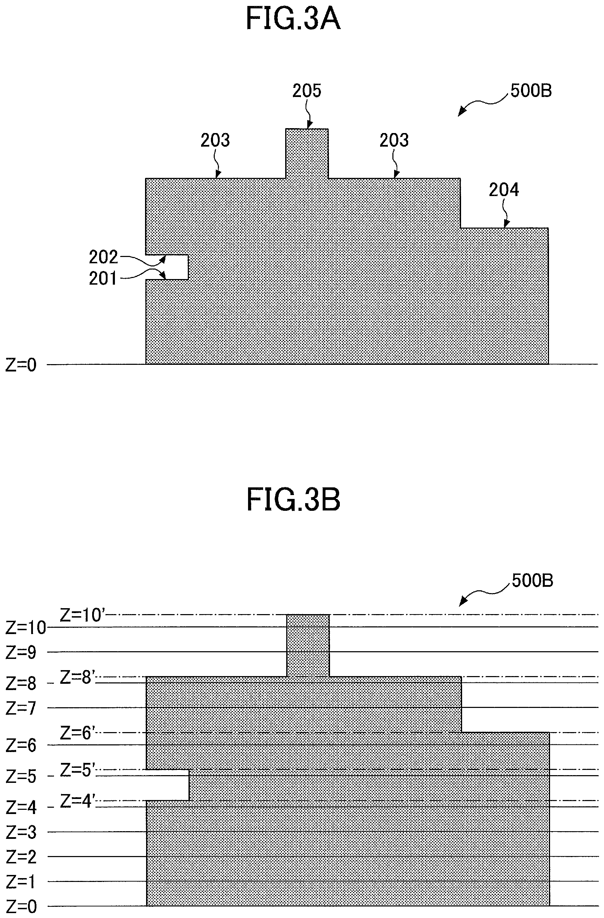

A method of determining a slice position implemented by an information processing apparatus according to an embodiment of the present invention is described below with reference to FIGS. 3A and 3B. FIGS. 3A and 3B are diagrams illustrating examples of feature planes, feature layers, and slice data of the 3D model 500B. Note that a feature plane refers to a plane at which a shape change occurs within a layer between two adjacent slice positions. Also, a feature layer refers to a layer including a feature plane. For example, in FIG. 3A, shape changes occur at feature planes 201, 202, 203, 204, and 205, and layers including these feature planes correspond to feature layers.

When one or more feature planes are included in a 3D model, the information processing apparatus according to the present embodiment adjusts slice positions in the following manner to create slice data. FIG. 3B illustrates an example manner in which the information processing apparatus according to the present embodiment determines slice positions.

(i) The information processing apparatus checks the Z coordinates of the feature planes occurring in the 3D model.
(ii) The information processing apparatus performs slicing at fixed layer thicknesses from the bottom, but when a feature plane is detected, the slicing layer thickness is partially changed so that a slicing position coincides with the Z coordinate of the feature plane.

In the present example, it is assumed that the positions of the feature planes have been determined. In FIG. 3B, the layer above the slice position Z=4 corresponds to a feature layer, and as such, the information processing apparatus determines position Z=4', which coincides with the Z coordinate of the feature plane, to be the next slice position after the slice position Z=4. Further, the information processing apparatus determines position Z=5, which is the fixed layer thickness from the position Z=4', as the next slice position. In FIG. 3B, the layer above the slice position Z=5 corresponds to a feature layer, and as such, the information processing apparatus determines position Z=5', which coincides with the Z coordinate of the feature plane, as the next slice position after the slice position Z=5.

Then, the information processing apparatus determines position Z=6, which is the fixed layer thickness from Z=5', as the next slice position. Then, because the layer above the slice layer Z=6 corresponds to a feature layer, the information processing apparatus determines position Z=6', which coincides with the Z coordinate of the feature plane, as the next slice position after the slice position Z=6. Then, the information processing apparatus determines position Z=7, which is the fixed layer thickness from the slice position Z=6', as the next slice position. Because the layer above the slice position Z=7 is not a feature layer, position Z=8, which is the fixed layer thickness from the slice position Z=7, is determined as the next slice position. Because the layer above the slice position Z=8 corresponds to a feature layer, the information processing apparatus determines position Z=8', which coincides with the Z coordinate of the feature plane, as the next slice position after the slice position Z=8.

Then, the information processing apparatus determines position Z=9, which is the fixed layer thickness from the slice position Z=8', as the next slice position. Because the layer above the slice position Z=9 is not a feature layer, position Z=10, which is the fixed layer thickness from the slice position Z=9, is determined as the next slice position. Then, because the layer above the slice position Z=10 corresponds to a feature layer, the information processing apparatus determines position Z=10', which coincides with the Z coordinate of the feature plane, as the next slice position after the slice position Z=10.

As described above, the information processing apparatus according to the present embodiment determines the slice positions such that they coincide with the feature planes, and in this way, an additive manufacturing apparatus may be able to accurately form the shape of an object based on slice data generated by the information processing apparatus.

<Terminology>

A shape of an object to be manufactured refers to a three-dimensional shape to be formed by an additive manufacturing apparatus. The shape of the object to be manufactured may be represented by some type of data. In the present embodiment, the term "3D model" is used to describe an example of the shape of an object to be manufactured or the object to be manufactured.

Data for manufacturing an object refers to information to be used and interpreted by an additive manufacturing apparatus to manufacture an object based on a 3D model. For example, such data may include instructions, controls, and settings. In the present embodiment, the term "print data" is used to describe an example of data for manufacturing an object.

Data relating to the shape of the object to be manufactured may be any data representing a three-dimensional shape. In the present embodiment, the term "3D data" is used to describe an example of data relating to the shape of the object to be manufactured.

Layering data refers to data used by an additive manufacturing apparatus to manufacture an object. The layering data may include cross-sectional shape contours of a 3D model, or a trajectory for a discharge nozzle of the additive manufacturing apparatus to move along the contour of the 3D model, for example. In the present embodiment, the term "print data" is used to describe an example of layering data.

<Configuration>

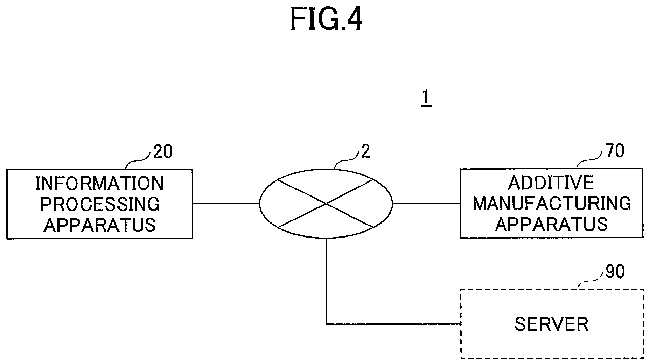

FIG. 4 is a diagram illustrating an example configuration of an additive manufacturing system 1 according to an embodiment of the present invention. The additive manufacturing system 1 includes an information processing apparatus 20 and an additive manufacturing apparatus 70 that are connected via a network 2. The network 2 is mainly implemented by an in-house LAN (local area network) but may also include a WAN (wide area network) or the Internet, for example. Further, the information processing apparatus 20 and the additive manufacturing apparatus 70 may be connected via a dedicated line such as a USB cable. Note that the network 2 and the dedicated line may be implemented by wire, or a part or all of the network 2 and the dedicated line may be implemented by a wireless technology, such as a wireless LAN or Bluetooth (registered trademark), for example.

The information processing apparatus 20 may be a PC (Personal Computer) or any apparatus that is capable of running a program for implementing process operation of the present embodiment as described below. For example, a tablet terminal, a smartphone, a PDA (Personal Digital Assistant), a mobile phone, a wearable PC, a game machine, a car navigation terminal, an electronic whiteboard, or a projector may also be used as the information processing apparatus 20.

The information processing apparatus 20 analyzes 3D data to construct a 3D model and slices the 3D model at equal intervals of a layer thickness (layer pitch) to create slice data. The slice data is converted into print data in the form of G code, and this print data is transmitted to the additive manufacturing apparatus 70. Note that in some embodiments, the print data may be stored in a storage medium, such as a USB memory or an SD memory card, and provided to the additive manufacturing apparatus 70, for example. The additive manufacturing apparatus 70 may read the print data from the storage medium that is installed in a storage medium I/F (interface), for example. In this case, the network 2 may not be required for providing the print data to the additive manufacturing apparatus 70.

Also, in some embodiments, the information processing apparatus 20 and the additive manufacturing apparatus 70 may be integrated. That is, the additive manufacturing apparatus 70 may implement the functions of the information processing apparatus 20 and perform processes such as creating print data from 3D data, for example. Also, in some embodiments, the information processing apparatus 20 may transmit 3D data to a server 90 and the server 90 may transmit the print data to the additive manufacturing apparatus 70, for example.

The additive manufacturing apparatus 70 produces a manufactured object based on print data. The additive manufacturing apparatus 70 may use any manufacturing method, such as fused deposition modeling (FDM), material jetting, binder jetting, selective laser sintering (SLS), or stereolithography (SLA) to produce the manufactured object. Fused deposition modeling (FDM) involves extruding thermally melted resin from a nozzle and stacking layers of resin to form a manufactured object, for example. Note that materials other than resin such as metal may be used as the material to be processed by the additive manufacturing apparatus 70. Material jetting is a method that involves ejecting resin from an ink jet head and solidifying and layering the resin using ultraviolet rays. Binder jetting is a method that involves ejecting a liquid binder from an ink jet head to solidify layers of gypsum or resin powder one by one. Selective laser sintering (SLS) is a method that involves irradiating a powdery material with laser to sinter the material. Stereolithography (SLA) is a method that involves curing liquid photopolymer resin to form layer upon layer of resin with ultraviolet laser. In the present embodiment, for the sake of convenience of explanation, it is assumed that the additive manufacturing apparatus 70 uses fused deposition modeling (FDM) as an example. Note, however, that a method of determining a slice position according to an embodiment of the present invention can be implemented in conjunction with any manufacturing method.

<Hardware Configuration>

In the following, hardware configurations of the information processing apparatus 20 and the additive manufacturing apparatus 70 are described.

<<Hardware Configuration of Information Processing Apparatus>>

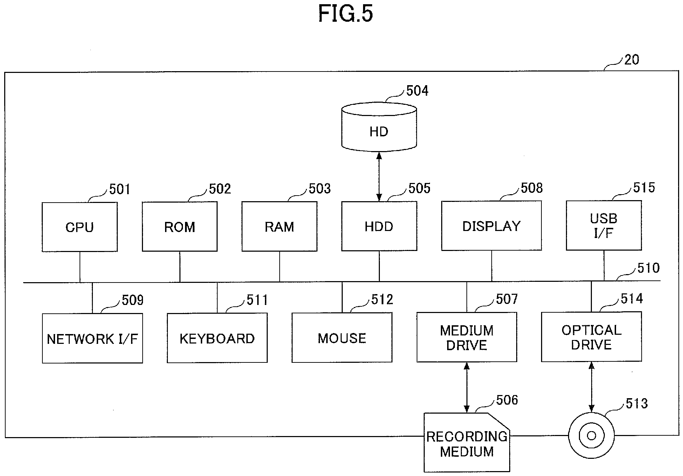

FIG. 5 is a diagram illustrating an example hardware configuration of the information processing apparatus 20. The information processing apparatus 20 includes a CPU (Central Processing Unit) 501, a ROM (Read-Only Memory) 502, a RAM (Random Access Memory) 503, an HD (Hard Disk) 504, an HDD (Hard Disk Drive) 505, a display 508, a network I/F (interface) 509, a keyboard 511, a mouse 512, a medium drive 507, an optical drive 514, a USB I/F 515, and a bus line 510, such as an address bus and/or a data bus for establishing electrical connection between the above hardware elements.

The CPU 501 controls the overall operation of the information processing apparatus 20. The ROM 502 stores a program such as an IPL (Initial Program Loader) for driving the CPU 501. The RAM 503 is used as a work area of the CPU 501. The HD 504 stores programs such as an OS (Operating System) and various data. The HDD 505 controls reading/writing of various data with respect to the HD 504 under control of the CPU 501. The network I/F 509 is an interface for enabling data communication using the network 2. The keyboard 511 is a device having a plurality of keys for enabling a user to input characters, numerical values, various instructions, and the like. The mouse 512 is a device for enabling the user to select and execute various instructions, select a processing target, move a cursor, and the like. The media drive 507 controls reading/writing (storing) of data from/in a recording medium 506 such as a flash memory. The optical drive 514 controls reading/writing of various data with respect to an optical disk (e.g., CD-ROM, DVD, Blu-Ray disc) 513 as an example of a removable recording medium. The display 508 displays various information, such as a cursor, a menu, a window, a character, or an image. The display 508 may be a projector, for example. The USB I/F 515 is an interface for establishing connection with a USB cable, a USB memory, or the like.

<<Hardware Configuration of Additive Manufacturing Apparatus>>

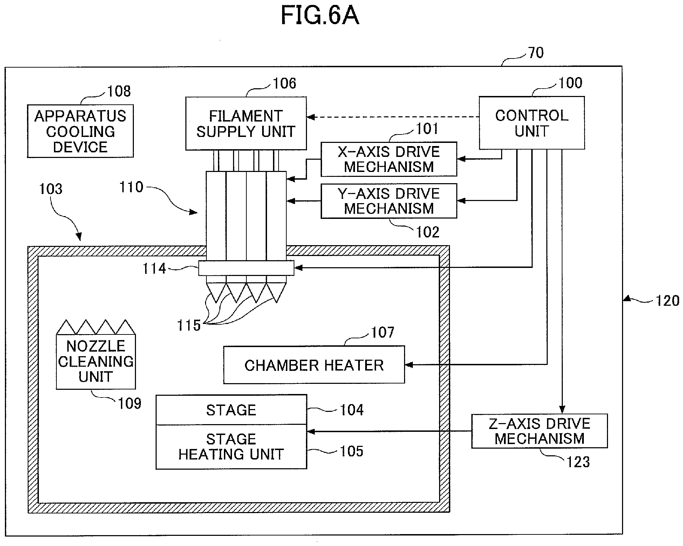

FIG. 6A is a diagram illustrating an example hardware configuration of the additive manufacturing apparatus 70. The additive manufacturing 70 includes a control unit 100, an X-axis drive mechanism 101, a Y-axis drive mechanism 102, a chamber 103, a filament supply unit 106, an apparatus cooling device 108, a head 110, and a Z-axis drive mechanism 123 that are arranged inside a frame 120. The interior of the chamber 103 is a processing space for forming a manufactured object, and a stage 104 as a mounting table on which the manufactured object is formed is provided inside the chamber 103 (processing space). Also, a stage heating unit 105, a chamber heater 107, and a nozzle cleaning unit 109 are provided inside the chamber 103 (processing space).

The head 110 is an example of a manufacturing unit and is provided above the stage 104. The head 110 includes discharge nozzles 115 for discharging a filament corresponding to a building material for manufacturing an object. In the present embodiment, four ejection nozzles 115 are provided in the head 110. However, any arbitrary number of ejection nozzles 115 may be provided in the head 110. The head 110 also includes a head heating unit 114 as an example of a material heating unit for heating the filament supplied to the discharge nozzles 115.

The filament is a fine wire that is arranged in a wound state when loaded in the additive manufacturing apparatus 70. The filament is supplied to each discharge nozzle 115 of the head 110 by the filament supply unit 106. Note that a different filament may be supplied to each discharge nozzle 115 or the same filament may be supplied to each discharge nozzle 115. In the present embodiment, the filament supplied by the filament supply unit 106 is heated and melted by the head heating unit 114 and extruded from a predetermined discharge nozzle 115 so that the melted filament may be successively layered to form a layered structure on the stage 104.

Note that in some cases, a support material that does not form a part of the manufactured object may be supplied to one or more of the discharge nozzles 115 of the head 110 instead of the filament corresponding to the building material of the manufactured object. The support material is usually a material that is different from the filament used as the build material and is ultimately removed from the object formed by the filament. The support material is also heated and melted by the head heating unit 114 and extruded from a predetermined ejection nozzle 115 so that the melted support material may be successively layered.

The X-axis drive mechanism 101 is arranged to extend in lateral directions (X-axis directions) of the additive manufacturing apparatus 70, and the head 110 is held by the X-axis drive mechanism 101 to be movable in the longitudinal directions of the X-axis drive mechanism 101 (X-axis directions). The head 110 can be moved in the lateral directions (X-axis directions) of the additive manufacturing apparatus 70 by a driving force of the X-axis drive mechanism 101. The Y-axis drive mechanism 102 is arranged to extend in longitudinal directions (Y-axis directions) of the additive manufacturing apparatus 70, and the lateral ends of the X-axis drive mechanism 101 are each slidably held by the Y-axis drive mechanism 102 to be movable in the longitudinal directions of the Y-axis drive mechanism 102 (Y-axis directions). The X-axis drive mechanism 101 can be moved in the Y axis direction by a driving force of the Y-axis drive mechanism 102, and as a result, the head 110 can be moved in the Y-axis direction.

Also, in the present embodiment, the chamber heater 107 as a processing space heating unit for heating the interior of the chamber 103 is provided inside the chamber 103 (processing space). In the present embodiment, an object is manufactured using fused deposition modeling (FDM), and as such, the temperature inside the chamber 103 is preferably maintained at a target temperature when performing the manufacturing process. Therefore, in the present embodiment, before the manufacturing process is started, a preheating process is performed in advance to raise the temperature inside the chamber 103 to the target temperature. During this preheating process, the chamber heater 107 heats the interior of the chamber 103 so that the temperature inside the chamber 103 rises to the target temperature, and during the manufacturing process, the chamber heater 107 heats the interior of the chamber 103 in order to maintain the temperature inside the chamber 103 at the target temperature. The operation of the chamber heater 107 is controlled by the control unit 100, which is described below.

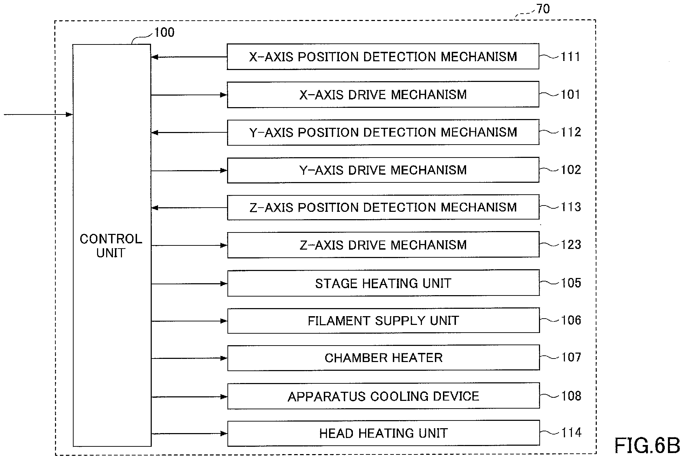

FIG. 6B is a control block diagram illustrating control elements of the additive manufacturing apparatus 70 according to the present embodiment. The additive manufacturing apparatus 70 includes an X-axis position detection mechanism 111 for detecting the position of the head 110 in the X-axis direction. The detection result of the X-axis position detection mechanism 111 is sent to the control unit 100. The control unit 100 controls the X-axis drive mechanism 101 based on the detection result to move the head 110 to a target X-axis direction position.

Also, in the present embodiment, the additive manufacturing apparatus 70 includes a Y-axis position detection mechanism 112 for detecting the Y-axis direction position of the X-axis drive mechanism 101 (position of the head 110 in the Y-axis direction). The detection result of the Y-axis position detection mechanism 112 is sent to the control unit 100. The control unit 100 controls the Y-axis drive mechanism 102 based on the detection result to move the head 110 held by the X-axis drive mechanism 101 to a target Y-axis direction position.

Also, in the present embodiment, the additive manufacturing apparatus 70 includes a Z-axis position detection mechanism 113 for detecting the position of the stage 104 in the Z-axis direction. The detection result of the Z-axis position detection mechanism 113 is sent to the control unit 100. The control unit 100 controls the Z-axis drive mechanism 123 based on the detection result and moves the stage 104 to a target Z-axis direction position.

By controlling movement of the head 110 and the stage 104 in the above-described manner, the control unit 100 may be able to move the relative three-dimensional positions of the head 110 and the stage 104 inside the chamber 103 to target three-dimensional positions.

<Functional Configuration of Additive Manufacturing System>

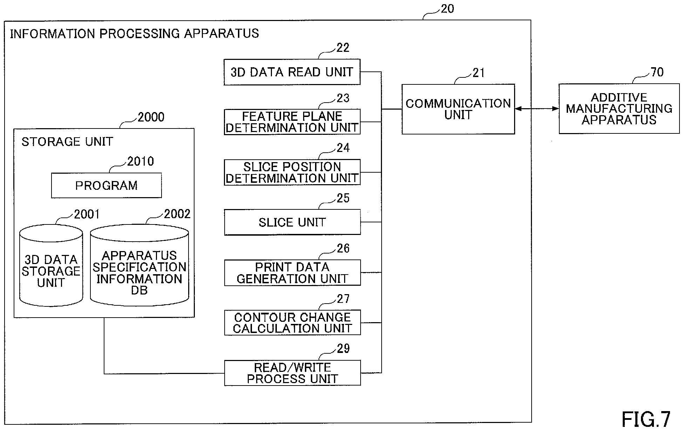

FIG. 7 is a block diagram illustrating an example functional configuration of the additive manufacturing system 1 including the information processing apparatus 20 and the additive manufacturing apparatus 70.

<<Information Processing Apparatus>>

A program 2010 is executed in the information processing apparatus 20. By executing the program 2010, the information processing apparatus 20 can implement the following functions.

The information processing apparatus 20 includes a communication unit 21, a 3D data reading unit 22, a feature plane determination unit 23, a slice position determination unit 24, a slice unit 25, a print data generation unit 26, a contour change calculation unit 27, and a read/write process unit 29. These functional elements of the information processing apparatus 20 may be implemented by one or more of the hardware elements illustrated in FIG. 5 operating based on instructions from the CPU 501 executing the program 2010 that has been loaded from the HD 504 into the RAM 503, for example.

Also, the information processing apparatus 20 includes a storage unit 2000 implemented by the HD 504 of FIG. 5. The storage unit 2000 includes a 3D data storage unit 2001, an apparatus specification information DB (database) 2002, and the program 2010. The program 2010 may be stored in the recording medium 506 or the optical disk (e.g., CD-ROM) 513 of FIG. 5 and distributed in such a state, or the program 2010 may be delivered to the information processing apparatus 20 from a server, for example. The program 2010 may be called a printer driver or an application program, for example. Also, the program 2010 according to the present embodiment may include two or more programs such as a printer driver and an application program, for example.

The 3D data storage unit 2001 stores 3D data. The 3D data may be read from a portable storage medium, such as a USB memory, by the information processing apparatus 20 or the additive manufacturing apparatus 70, the 3D data may be downloaded from a server connected via a network, or the 3D data may be created by a 3D application running on the information processing apparatus 20, for example. The 3D application may be software that is called "3DCAD" or "3DCG", for example. The data format of the 3D data output by the 3D application may be STL (Standard Triangulated Language), for example, but it is not limited thereto. Other example data formats that may be used include 3MF (3D Manufacturing Format), PLY (Polygon file format), and OBJ (Object file format).

```
solid ascii
   facet normal 0.000000 0.000000 1.000000
      outer loop
         vertex    0.000000 2.000000 5.000000
         vertex   -2.000000 2.000000 5.000000
         vertex    0.000000 0.000000 5.000000
      endloop
   endfacet
   facet normal 0.000000 0.000000 1.000000
      outer loop
         vertex    0.000000 0.000000 5.000000
         vertex   -2.000000 2.000000 5.000000
         vertex   -2.000000 0.000000 5.000000
      endloop
   endfacet
   facet normal 0.000000 0.000000 -1.000000
      outer loop
         vertex    0.000000 0.000000 0.000000
         vertex   -2.000000 0.000000 0.000000
         vertex    0.000000 2.000000 0.000000
      endloop
   endfacet

   ···(OMITTED)···

Endsolid
```

[Table 1]

Table 1 illustrates an example of 3D data. Table 1 represents 3D data in the STL format. The STL is a file format that represents a shape using a series of triangle polygons. Note that information of one triangle includes the vertices of the triangle in a three-dimensional space and the normal vector of the triangle.

In Table 1, information between "facet" and "endfacet" represents one triangle. Also, "normal" represents the normal vector of the triangle, and "vertex" represents coordinates of the three vertices of the triangle. A three-dimensional shape may be represented by repeatedly describing such triangle data. The surface of a 3D model is represented by the vertices of these triangles, and as such, a feature surface may be detected and slice data may be calculated through geometric calculation.

As described above, 3D data may be in any format as long as it represents a three-dimensional shape. Also, if the surface shape of a three-dimensional shape is known, the surface can be divided into triangles and converted into STL.

[Table 2]

| LAYER THICKNESS UPPER LIMIT | A [mm] |
|---|---|
| LAYER THICKNESS LOWER LIMIT | B [mm] |
| VARIABLE UNIT | C [mm] |

Table 2 is a table schematically representing information stored in the apparatus specification information DB 2002. The apparatus specification information DB 2002 stores specifications of the additive manufacturing apparatus 70. In the present embodiment, the apparatus specification information DB 2002 stores a layer thickness upper limit, a layer thickness lower limit, and a variable unit. Although other specifications of the additive manufacturing apparatus 70 may be stored, descriptions thereof are omitted. The layer thickness upper limit is the maximum thickness of one layer of material that can be formed by the additive manufacturing apparatus 70, and the layer thickness lower limit is the minimum thickness of one layer of material that can be formed by the additive manufacturing apparatus 70. The variable unit is the smallest unit of change that can be made in the layer thickness.

(Functions of Information Processing Apparatus)

The communication unit 21 of the information processing apparatus 20 may be implemented by the network I/F 509 and instructions from the OS and the CPU 501 of FIG. 5, for example. The communication unit 21 communicates with the additive manufacturing apparatus 70. Specifically, the print data converted from 3D data is transmitted to the additive manufacturing apparatus 70 via the communication unit 21.

The 3D data reading unit 22 may be implemented by the HDD 504 and an instruction from the CPU 501 of FIG. 5, for example. The 3D data reading unit 22 reads 3D data from the 3D data storage unit 2001.

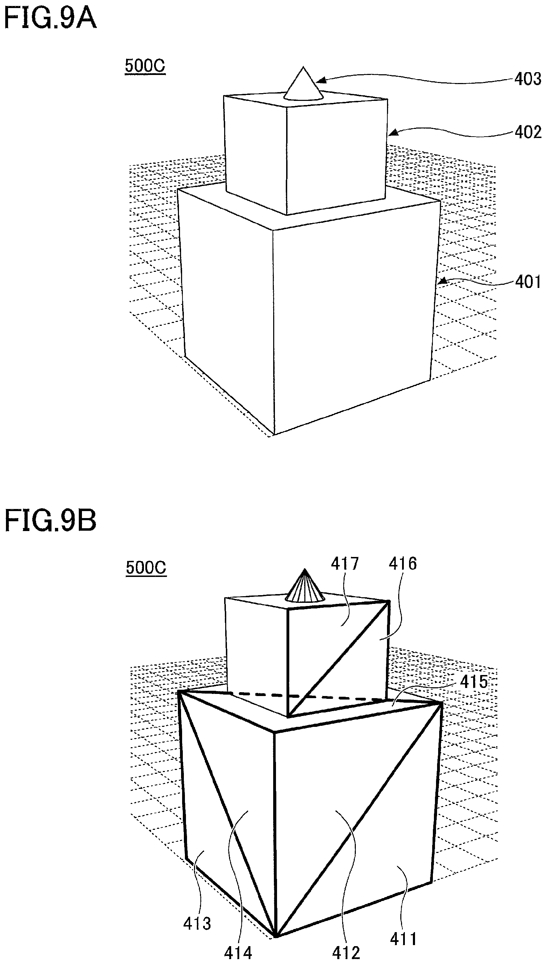

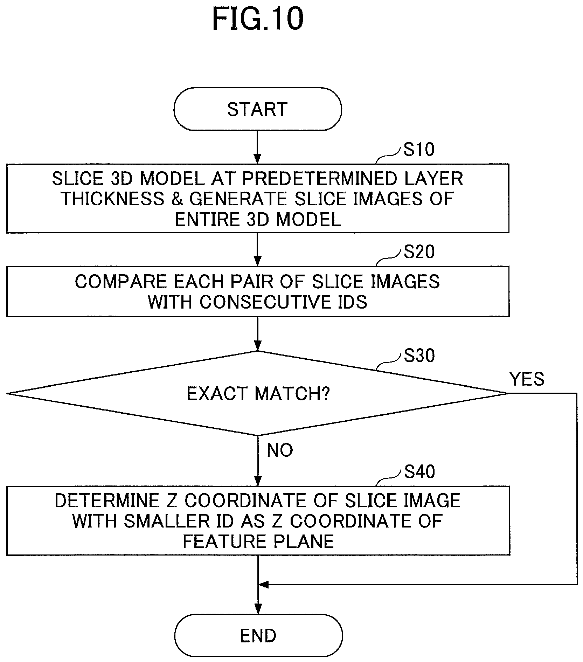

The feature plane determination unit 23 may be implemented by an instruction from the CPU 501 of FIG. 5, for example. The feature plane determination unit 23 determines a feature plane and a feature layer including the feature plane. Note that a method for determining the feature plane is described below with reference to FIGS. 9A, 9B, and 10. The feature plane determination unit 23 registers the Z coordinate of the feature plane in a feature plane table, which is described below.

The slice position determination unit 24 may be implemented by an instruction from the CPU 501 of FIG. 5, for example. The slice position determination unit 24 uses the feature plane table created by the feature plane determination unit 23 to determine slice positions of a 3D model such that slice data at each feature plane may be generated.

The slice unit 25 may be implemented by an instruction from the CPU 501 of FIG. 5, for example. The slice unit 25 performs process operations relating to manufacturing a 3D model. Specifically, the slice unit 25 arranges a 3D model represented by 3D data in a virtual space of the additive manufacturing apparatus 70. Note that the orientation of the 3D model may be set in response to an operation by a user. Further, the slice unit 25 slices the 3D model at equal intervals (at intervals of a layer thickness) in the Z-axis direction, and creates a cross-sectional shape of the 3D model at each Z coordinate obtained by slicing the 3D model. In the present embodiment, the interval (slice interval) between the slice positions is variable. Also, the 3D data is represented by polygons, for example, and as such, when the Z coordinate is determined, the X and Y coordinates of the polygon at the Z coordinate may be obtained. The slice data is a set of X and Y coordinates of the cross-section of the polygon.

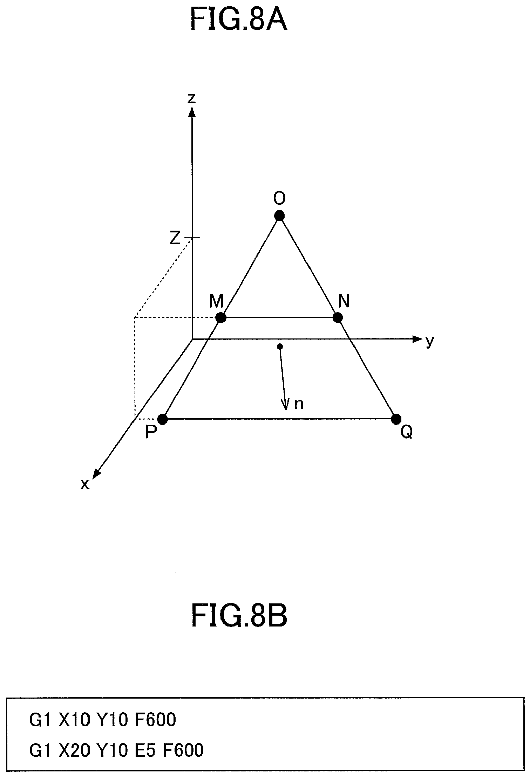

The print data generation unit 26 may be implemented by an instruction from the CPU 501 of FIG. 5, for example. The print data generation unit 26 generates print data based on the slice data. Note that although print data is often described in G code, the data format of the print data is not particularly limited as long as the print data is in a data format that can be interpreted by the additive manufacturing apparatus 70. An example of print data in G code is described below with reference to FIG. 8B.

The contour change calculation unit 27 may be implemented by an instruction from the CPU 501 of FIG. 5, for example. The contour change calculation unit 27 compares slice data of two different slice positions and calculates an amount of change in the contour shapes represented by the slice data.

The read/write process unit 29 may be implemented by the HDD 505 and an instruction from the CPU 501 of FIG. 5, for example. The read/write process unit 29 stores various data in the storage unit 2000 and reads various data from the storage unit 2000. Note that in the following, when the information processing apparatus 20 is described as reading data from or writing data in the storage unit 2000, it may be assumed that the data is being read from or written in the storage unit 2000 via the read/write process unit 29 even though the description "via the read/write process unit 29" may be omitted.

<Slice Data Generation and Print Data (G Code)>

FIG. 8A is a diagram describing the generation of slice data. For convenience of explanation, one polygon in a three-dimensional space will be described as an example. The coordinates of the normal vector n (a, b, c) and the vertices OPQ of the polygon are provided by STL data. An equation of a plane including this polygon may be expressed by the following equation, where $(X_o, Y_o, Z_o)$ is a point on the polygon and may be the coordinates of any of the vertices of the polygon.

$$a(x - X_o) + b(y - Y_o) + c(z - Z_o) = 0$$

To slice a polygon at a certain Z coordinate (Z), Z is substituted for z in the above equation (z=Z) and an equation (ax + by = constant) for line MN is obtained. Note that M is a point on side OP of the polygon at height Z, and N is a point on side OQ of the polygon at height Z. The line MN exists only within the polygon, and as such, the line MN can be obtained by obtaining the coordinates of point M and point N. Point M is a point at height Z on a line passing through vertices O and P, and point N is a point at height Z on a line passing through vertices O and Q. The line MN corresponds to a cross-sectional shape when the polygon is sliced.

FIG. 8B is a diagram illustrating an example of print data in G code. Note that one line of G code represents one instruction of print data. Although various instructions may be described, FIG. 8B illustrates an instruction relating to the movement of the discharge nozzle 115. An instruction beginning with "G1" indicates movement of the discharge nozzle 115 and supply of material. In FIG. 8B, the first line represents an instruction to move to the position of X=10, Y=10 at a speed of 600 [mm/minute]. The second line represents an instruction to supply 5 [mm] of material while moving to the position of X=20, Y=10 at 600 [mm/minute].

In the example of FIG. 8B, the print data generation unit 26 generates an instruction to eject material from point M to point N (or vice versa) with G code.

G code is often used in the additive manufacturing apparatus 70 that implements fused deposition modeling (FDM). However, the print data may be in any data format as long as the trajectory of the discharge nozzle 115 (a set of coordinates of two points), the moving speed, and the amount of material to be supplied are indicated. Further, in the additive manufacturing apparatus 70 that uses a manufacturing method other than the FDM method, print data in a data format that is compatible with the manufacturing method may be used.

<Feature Plane Determination>

In the following, two example methods of determining a feature plane are described.

(i) Feature Plane Determination based on 3D Data (Polygon Data)

As described above, a 3D model may be represented by a collection of data of a polygon mesh. 3D data, regardless of whether STL or some other format is used, always contains polygon data.

In the following, a method of determining a feature plane is described with reference to FIGS. 9A and 9B. FIG. 9A illustrates an example of a 3D model 500C. The 3D model 500C includes two rectangular parallelepipeds 401 and 402 and one cone 403. For example, as illustrated in FIG. 9B, the lowermost rectangular parallelepiped 401 may be represented by a combination of a plurality of triangular polygons 411 to 415. The upper surface of the rectangular parallelepiped 401 includes the polygon 415, and this polygon 415 corresponds to a feature plane. That is, the polygon 415 is a plane in which a shape change occurs, and the fact that there is a shape change means that a surface defined by a polygon exists and 3D data representing the surface exists.

Therefore, 3D data including a Z coordinate always exists for a plane defined as a feature plane in the present embodiment. Thus, the feature plane determination unit 23 can determine (extract) the Z coordinates of planes where the shape of the 3D model 500 changes by examining the Z coordinates of the vertices included in all the polygons of the 3D data. For example, all the vertices of the planes 416 and 417 include Z coordinates of feature planes. Note that overlapping Z coordinates may be disregarded.

Also, the cone 403 is configured such that each polygon is aligned in the circumferential direction with the vertices of the plurality of polygons coinciding with the vertex of the cone 403. However, each polygon extends straight from the bottom surface of the cone 403 to the vertex without any discontinuities. Thus, the Z coordinates of the polygons forming the cone 403 also correspond to the Z coordinates of feature planes.

In this way, the feature plane determination unit 23 can detect a feature plane from 3D data. Also, in this feature plane determination method, the processing load can be reduced as compared with the case of using slice data to compare the cross-sectional shapes of the slice data as described below.

[Table 3]

| FEATURE PLANE ID | 1 | 2 | 3 | 4 | ■ ■ ■ |
|---|---|---|---|---|---|
| Z COORDINATE [mm] | 2.90 | 3.95 | 6.56 | 7.74 | ■ ■ ■ |

Table 3 illustrates an example of the feature plane table. In the above feature plane table, a feature plane ID and a Z coordinate are associated with each other. The feature plane determination unit 23 registers a detected feature plane in the feature surface table. The feature surface ID is identification information for identifying a feature plane. The identification information may be a name, a code, a character string, a numerical value, or a combination of two or more of the above that is used for uniquely distinguishing a specific item from a plurality of items. The same applies to other IDs and identification information described below. For example, the feature plane ID may be a non-overlapping unique integer assigned to each feature plane. The Z coordinates of the feature plane table correspond to the Z coordinates of the feature planes.

(ii) Converting cross-sectional shape of slice data into image data and comparing the image data to determine a feature plane.

As described above with reference to FIG. 8A, slice data represents a cross-sectional shape of a 3D model obtained by cutting the 3D model across a plane perpendicular to a given Z coordinate. The feature plane determination unit 23 converts the slice data into image data such as a bit map image (hereinafter referred to as "slice image"). By converting the slice data into a slice image, the cross-sectional shape can be handled as an image and a change in the shape of the feature plane may be easily detected.

In the following, process operations for implementing a feature plane determination process are described with reference to FIG. 10. FIG. 10 is a flowchart illustrating example process operations of the feature plane determination unit 23 for determining a feature surface.

In step S10, the feature plane determination unit 23 slices a 3D model into layers at predetermined layer thicknesses such that all feature layers (feature planes) of the 3D model are included and generates slice images of the entire 3D model. The feature plane determination unit 23 successively slices the 3D model from the bottom layer and successively assigns IDs (e.g., sequential numbers) to slice images in chronological order, for example. To generate a slice image, for example, an image memory including a maximum value in the XY plane of the 3D model 500 may be prepared, and pixels corresponding to straight lines included in the cross-sectional shape of the slice image may be replaced with black pixels (the other pixels being white pixels). As a result, a slice image represented by a bitmap may be obtained.

As for the method of determining the predetermined layer thickness, for example, the predetermined layer thickness may be equal to the layer thickness lower limit for the additive manufacturing apparatus 70. The layer thickness lower limit is registered in the apparatus specification information DB 2002. Alternatively, the predetermined layer thickness may be set up according to the precision of the Z coordinates of 3D data representing the 3D model. For example, with respect to 3D data representing an entire 3D model, when the Z coordinate value is expressed in units of 1/100 mm at the minimum, the predetermined layer thickness of the slice image may also be set to 1/100 mm. Note that the method of determining the predetermined layer thickness for slicing a 3D model such that all feature layers of the 3D model are included is not limited to the above method.

In step S20, the feature plane determination unit 23 successively compares each pair of slice images having consecutive IDs. That is, the feature plane determination unit 23 successively compares each set of two slice images (1, 2), (2, 3), (3, 4), and so forth.

In step S30, the feature plane determination unit 23 determines whether the compared two slice images exactly match one another. For example, if the slice image is a bitmap image, pixels corresponding to an arbitrary position of the images may be extracted and compared with each other. Such a comparison process may be executed with respect to the entire area of the images.

If no "mismatch" is found by the comparison process, it may be determined that the two slice images exactly match. Note that the above comparison method is merely one example, and the comparison may also be made based on the area of the cross-sectional shape of the 3D model or the outer edge length of the continuous cross-sectional shape of the 3D model, for example. That is, the comparison method is not limited to a particular method as long as it can be determined whether the cross-sectional shapes of the slice images exactly match.

In step S40, when the two slice images do not match, the feature plane determination unit 23 determines the Z coordinate of the slice image having the smaller ID (sequential number) out of the two slice images as being the Z coordinate of a feature plane. The Z coordinate of the feature plane may be obtained by calculating the product of the layer thickness used in step S10 and the ID (sequential number) of the slice image corresponding to the feature plane. The feature plane determination unit 23 registers the Z coordinate in the feature plane table. By implementing the above processes, all the Z coordinates having feature planes (shape change) may be detected.

<Slice Position Determination>

In the following, determination of the slice positions is described. The slice position determination unit 24 determines the slice positions of the entire 3D model using the feature plane table. The basic procedure is as follows.

(a) Determine a next slice position a fixed layer thickness from the bottom (Z = 0).
(b) When the next slice position (Z coordinate) exceeds a Z coordinate of a feature plane registered in the feature plane table, the next slice position is adjusted to coincide with the feature plane.

For example, the fixed layer thickness may be set to 2.0 [mm]. In this case, the first slice position is 2.0 [mm] from the bottom. The next slice position is 2.0 + 2.0 = 4.0 [mm] from the bottom. In the above Table 3 representing the feature plane table, the Z coordinate of the feature plane with the feature plane ID = 1 is 2.9 mm. Thus, the slice position determination unit 24 determines to slice the 3D model at 2.9 mm. Therefore, the layer thickness of the layer below this slice position is 2.9 - 2.0 = 0.9 [mm]. In the present embodiment, the adjusted layer thickness is always smaller than the fixed layer thickness (adjusted layer thickness < fixed layer thickness), and as such, degradation of the manufacturing quality can be prevented.

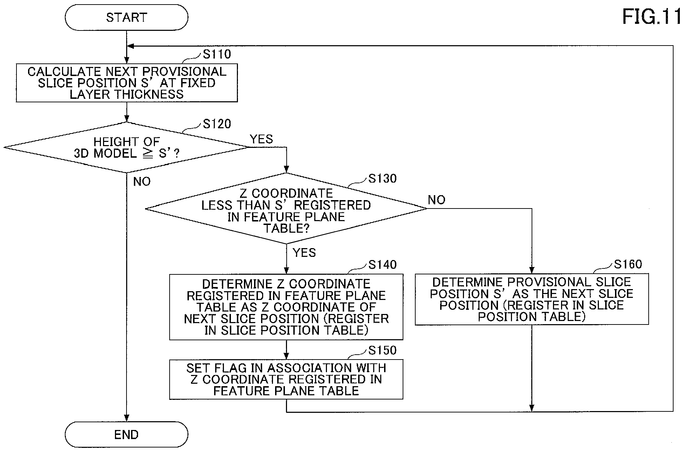

FIG. 11 is a flowchart illustrating example process operations of the slice position determination unit 24 determining slice positions.

In step S110, the slice position determination unit 24 calculates a next provisional slice position S' at a fixed layer thickness. For example, the provisional slice position S' may be determined by adding the fixed layer thickness to the Z coordinate at 0 [mm].

Then, in step S120, the slice position determination unit 24 determines whether the height of the 3D model 500 is greater than or equal to the height of the next provisional slice position S'. Step S120 is a process step for determining whether the process of FIG. 11 to be ended. When a negative determination (NO) is made in step S120, the process of FIG. 11 is ended.

If a positive determination (YES) is made in step S120, the slice position determination unit 24 determines whether there is a Z coordinate less than the Z coordinate of the provisional slice position S' registered in the feature plane table (step S130). As indicated in step S150, a flag is set up in the feature plane table in association with the feature plane ID of the feature plane that has been determined to be a slice position so that the feature plane already determined to be a slice position will not be taken into account in the determination of step S130 that is subsequently performed.

As described above, in the present embodiment, the 3D model is sliced at a feature plane, and as such, when a positive determination (YES) is made in step S130, the corresponding Z coordinate registered in the feature plane table is determined as the next slice position (step S140). The slice position determination unit 24 registers a slice ID, a layer thickness, and a Z value in a slice position table as described below in Table 4. The "slice ID" may be a sequential number, for example, the "Z value" corresponds to the Z coordinate of the feature plane table, and the "layer thickness" is the difference in the Z values of a given slice position and a slice position immediately preceding this slice position (i.e., slice position with a slice ID that is smaller by one unit).

Then, a flag is set up in the feature plane table in association with the feature surface ID of the feature plane determined as the slice position (step S150). Alternatively, in some embodiments, the feature plane ID and the Z coordinate of the feature plane that has been determined as the slice position may be deleted from the feature plane table.

If a negative determination (NO) is made in step S130, this means that a feature plane is not included in the layer up to the provisional slice position S', and as such, the provisional slice position S' is determined as the next slice position and registered in the slice position table (step S160). The "slice ID" of the slice position table may be a sequential number assigned to each slice position, for example, the "Z value" of a slice position may be obtained by adding a certain layer thickness to the Z value of an immediately preceding slice position with a slice ID one unit smaller, and the "layer thickness" may be the thickness of a layer formed by a slice position.

After performing the process of step S150 or step S160, the process proceeds to step S110, and the slice position process is repeatedly performed until a negative determination (NO) is made in step S120 at which point the process of FIG. 11 is ended.

[Table 4]

| SLICE ID | 1 | 2 | 3 | 4 | 5 | 6 | ▪ ▪ ▪ |
|---|---|---|---|---|---|---|---|
| LAYER THICKNESS [mm] | 2.00 | 0.90 | 1.05 | 2.00 | 0.61 | 1.18 | ▪ ▪ ▪ |
| Z VALUE [mm] | 2.00 | 2.90 | 3.95 | 5.95 | 6.56 | 7.74 | ▪ ▪ ▪ |

Table 4 illustrates an example of the slice position table indicating slice positions that have been determined. In the above slice position table, the "layer thickness" and the "Z value" of each slice position are registered in association with the "slice ID" of the slice position. The "slice ID" is identification information for identifying the slice position. The slice ID may be a non-overlapping integer, for example. The "layer thickness" is the distance in the height direction between the slice position with a slice ID "i" and the slice position with a slice ID "i+1". The "Z value" indicates the height of the slice position. The slice unit 25 slices a 3D model at the heights represented by the Z values registered in the slice position table.

As described above, the information processing apparatus 20 according to the present embodiment determines slice positions so that they coincide with feature planes included a 3D model, and in this way, the additive manufacturing apparatus 70 can accurately form the shape of an object.

<Correction of Z Coordinate of Feature Plane>

Depending on the specifications of the additive manufacturing apparatus 70, the additive manufacturing apparatus 70 may not be capable of forming a layer at the position of a feature plane determined in the above-described manner.

As described above with reference to the apparatus specification information DB 2002, the range of layer thickness that can be formed by the additive manufacturing apparatus 70 is determined by the specification of the additive manufacturing apparatus 70. For example, the additive manufacturing apparatus 70 may only be capable of forming layers at a layer thickness in a range from 0.05 [mm] to 0.2 [mm]. That is, 0.05 [mm] may be the layer thickness lower limit, and 0.2 [mm] may be the layer thickness upper limit for the additive manufacturing apparatus 70. An example case is described below where the layer thickness lower limit is 0.05 [mm] and the fixed layer thickness is set to 0.12 [mm].

For example, if the Z coordinate of a feature plane is 0.15 [mm], the additive manufacturing apparatus 70 with the above specifications would not be able to form a layer at the position of the feature plane. That is,
Z coordinate of first layer = 0.12
Z coordinate of second layer = 0.12+0.05 = 0.17 [mm]

Thus, the additive manufacturing apparatus 70 cannot form a layer at the position 0.15 [mm] of the feature plane. For example, if the layer thickness lower limit is 0.03 [mm], the Z coordinate of the second layer may be set to 0.15 [mm], but in the additive manufacturing apparatus 70 with a layer thickness lower limit of 0.5 [mm], a next layer can only be formed at 0.17 [mm] after the layer formed at 0.12 [mm].

In this respect, the slice position determination unit 24 determines the slice positions in consideration of the layer thickness limitations of the additive manufacturing apparatus 70. Because the feature plane cannot be moved, the Z coordinate of the first layer is calculated as follows:

$$Z \text{ coordinate of first layer} = Z \text{ coordinate of feature plane} - \text{layer thickness lower limit}$$

That is, the slice position determined at a height lower than the feature plane is changed to a value obtained by subtracting the layer thickness lower limit from the Z coordinate of the feature plane. For example, assuming the layer thickness lower limit is 0.05 mm, the fixed layer thickness is 0.12 mm, and the Z coordinate of the feature plane is 0.15 mm, the Z coordinate of the first layer may be calculated as follows: 0.15 mm - 0.05 mm = 0.10 mm.

In this way, the slice position before a feature plane can be appropriately adjusted in view of the specifications of the additive manufacturing apparatus 70 so that a layer can be formed at the Z coordinate of the feature plane. That is, the additive manufacturing apparatus 70 can be controlled to reproduce feature planes of a 3D model as faithfully as possible.

<Feature Plane Determination Method (i)>

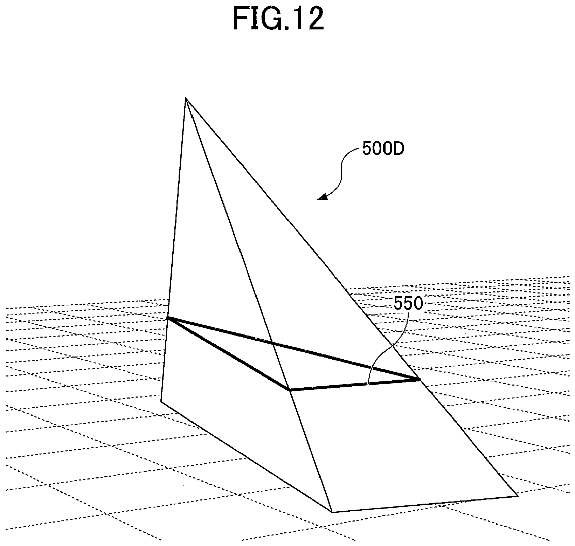

In the above determination method (i) that involves determining a feature plane based on 3D data (polygon data), a feature plane may be determined by simply comparing 3D data. This may be easier than determining a feature plane by comparing a large number of slice images. However, the determination method (i) may not be conducive to a 3D model 500D corresponding to a triangular pyramid as illustrated in FIG. 12, for example. In FIG. 12, a cross-section 550 of the 3D model 500D gradually decreases in size as the height increases. Thus, strictly speaking, a feature plane exists at any arbitrary Z coordinate of the 3D model 500D. On the other hand, a plane inclined obliquely to form a side face of the pyramid can be represented by polygon data of one polygon extending from the bottom to the vertex of the pyramid. The 3D model 500D of FIG. 12 is made up of four polygons.

When a process of determining a feature plane based on the Z coordinates of 3D data representing the 3D model 500D is performed, feature planes may only be detected at the bottom face and the vertex of the triangular pyramid. That is, the information processing apparatus 20 may not be able to detect the cross-section 550 that gradually decrease in size. As such, the manufacturing precision of the obliquely oriented face reproduced by additive manufacturing apparatus 70 may be substantially the same as that achieved by conventional methods, for example.

In this respect, the information processing apparatus 20 according to the present embodiment compares a change in the cross-sectional shapes of slice data at two slice positions with a predetermined threshold and determines a corresponding layer between the two slice positions to be a feature layer including a feature plane if the cross-sectional shape change is greater than or equal to the threshold. Although the manufacturing precision cannot surpass the specifications of the additive manufacturing apparatus 70, the user may set the threshold to enable detection of a feature plane at a desired precision so that an object may be manufactured at a desired manufacturing precision. That is, the detection precision for detecting a feature plane can be intentionally manipulated.

A process implemented by the feature plane determination unit 23 for determining a feature plane based on a threshold may include the following process operations, for example.

(a) The feature plane determination unit 23 deletes from the feature planes obtained from 3D data, one or more feature planes with an amount of contour shape change below a threshold. Note that the above process operation (a) may be omitted in some embodiments. That is, although manufacturing precision is degraded when a feature plane is deleted, if the user can tolerate some degradation of manufacturing precision, the manufacturing time can be reduced by implementing the process operation (a).

(b) The feature plane determination unit 23 adds, as a feature plane, a Z coordinate at which a contour shape change exceeding the threshold occurs due to the existence of an "oblique plane" that cannot be extracted from 3D data (see e.g., FIG. 12).

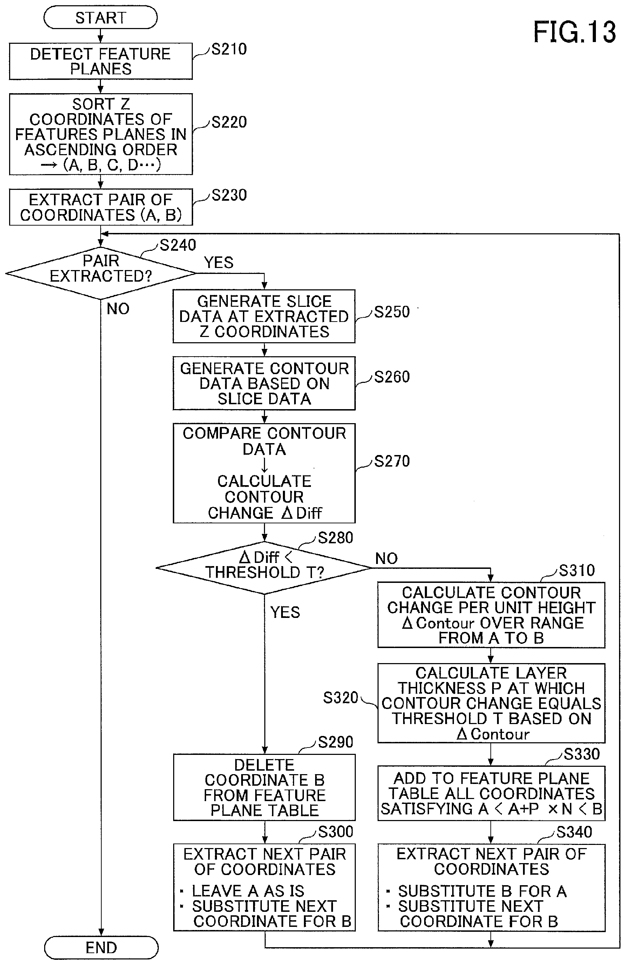

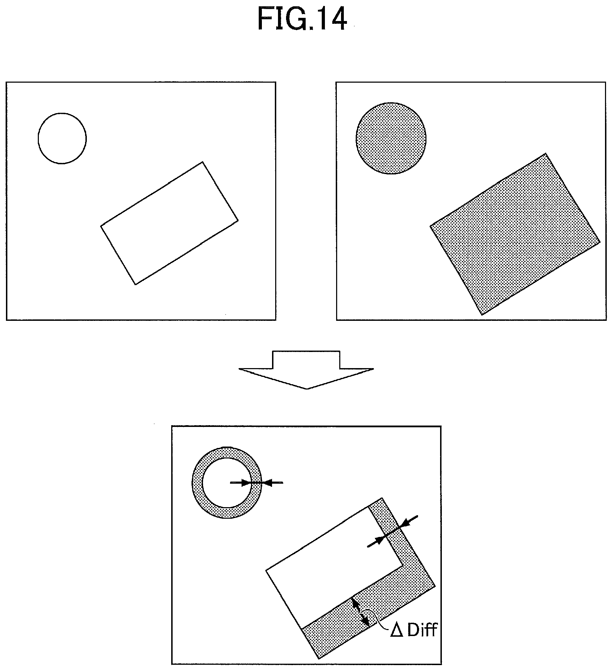

FIG. 13 is a flowchart illustrating example process operations of the feature plane determination unit 23 for determining a feature plane based on a threshold. FIG. 14 is a diagram schematically illustrating the feature plane determination process.

In step S210, the feature plane determination unit 23 detects Z coordinates of feature planes from 3D data.

Then, in step S220, the detected Z coordinates are sorted in ascending order based on the coordinate values. For convenience of explanation, it is assumed in the present example that Z coordinates A, B, C, D, E ... have been detected in step S210.

Then, in step S230, a pair of coordinates that are close to each other (starting with the pair (A, B) in the present example) is extracted from the sorted Z coordinates. Note that when a pair of coordinates cannot be extracted (NO in step S240), the process of FIG. 13 is ended.

When a pair of coordinates can be extracted, the feature plane determination unit 23 generates slice data at the extracted Z coordinates A and B (step S250). Examples of slice data at the two extracted Z coordinates are illustrated in FIG. 14.

Then, in step S260, the feature plane determination unit 23 generates contour data from the slice data. For example, slice images may be used to generate the contour data. Using image data such as slice images may facilitate generation of contours. The feature plane determination unit 23 may generate a group of coordinate vertices representing a contour shape from each slice image.

Freeman chain code is an example contour extraction algorithm that may be used in the present embodiment. A process using the Freeman chain code to find a contour is briefly described below. First, raster scanning is performed on a slice image from the upper left and the contour of a 3D model is searched. Using the first pixel found as a starting point, contour detection is performed in the counterclockwise direction. That is, a pixel representing the contour of the 3D model is searched from the lower left part of the starting point in the counterclockwise direction (it can be determined from raster scanning that there is no contour of the 3D model on the left, upper left, or upper side of the starting point). If a pixel is found, this pixel becomes a next pixel (next contour pixel), and a similar search process is repeated. The process is terminated upon returning to the starting point.

By implementing such a process, a set of vertices indicating a starting point, an ending point, and a bending point of a line segment constituting a contour may be obtained, for example. Also, if multiple contour lines exist (e.g., circle outline having another circle outline arranged inside), these contours may be separately detected. That is, one set of vertices represents a contour that can be drawn in one stroke.

Then, in step S270, the feature plane determination unit 23 compares the two contour shapes. The contour change calculation unit 27 identifies a portion having the greatest contour difference. FIG. 14 illustrates example differences in in the contour shapes at two coordinates. The contour change calculation unit 27 calculates differences in the contour shapes when the two contour shapes overlap and determines a contour change ΔDiff of a portion where the greatest contour difference is obtained. Specifically, coordinates of the contour at the Z coordinate A are extracted and coordinates of the contour at the Z coordinate B are searched in eight directions (upper, upper right, right, lower right, lower left, lower left, upper left) with respect to the contour at the Z coordinate A. The distances between a given contour coordinate at the Z coordinate A and the eight contour coordinates found for the Z coordinate B are calculated, and the smallest distance among the calculated distances is determined as the distance between the contour coordinate at the Z coordinates A and the contour coordinate at the Z coordinates B. This process is performed with respect to all the contour coordinates at the Z coordinate A, and the greatest distance is determined to be the contour change ΔDiff.

Note that although the maximum contour change is determined to be the contour change ΔDiff in the present embodiment, in other embodiments, the total amount of the distances between the contour coordinates of the Z coordinate A and the contour coordinates of the Z coordinate B or the difference in the total length of the contour lines of the contours at the Z coordinates A and B may be set up as the contour change ΔDiff.

Then, in step S280, the feature plane determination unit 23 determines whether the above-determined contour change ΔDiff is less than a given threshold T (ΔDiff < threshold T?). If a positive determination (YES) is made in step S280, this means that the differences in the contour shapes at the Z coordinates A and B is relatively small, and as such, the feature plane determination unit 23 deletes the Z coordinate B from the feature plane table (step S290).

Note that an arbitrary value may be input as the threshold T by a user, for example, and in this way, an object may be manufactured at a precision designated by the user. Further, the information processing apparatus 20 may have the threshold T set up in advance, for example. Note, however, that the method of setting the threshold T is not limited to the above methods.

When a Z coordinate is deleted from the feature plane table, the feature plane determination unit 23 extracts a next pair of coordinates (step S300) and repeats the above processes from step S240. Because the contour change ΔDiff is below the threshold T, one of the next pair of coordinates remains the coordinate A, and coordinate C becomes the other coordinate of the pair.

When a negative determination (NO) is made in step S280, this means that difference in the contour shape of the contours at the coordinates A and B is relatively large, and the feature plane determination unit 23 obtains a contour change per unit height ΔContour (step S310). The contour change per unit height may be calculated as follows: ΔContour = ΔDiff/(B-A).

Then, in step S320, based on the ΔContour, the feature plane determination unit 23 determines a layer thickness P at which a contour change equals the threshold T. That is, the feature plane determination unit 23 determines a layer thickness satisfying P = T/ΔContour.

Then, in step S330, the feature plane determination unit 23 adds to the feature plane table, all layer thicknesses P satisfying the following condition: A < A+P×N < B (N = 1, 2, 3...). That is, in the range from the coordinates A to B, feature planes are created at increments of the layer thickness P.

Then, in step 340, the feature plane determination unit 23 extracts the next pair of coordinates and repeats the above processes from step S240. Because the contour change ΔDiff exceeds the threshold T, the coordinate B is one of the next pair of coordinates, and the coordinate C becomes the other coordinate of the pair.

As can be appreciated, even in a case where only two points (vertex and bottom) can be extracted as Z coordinates of feature planes as with the triangular pyramid illustrated in FIG. 12, for example, by implementing the processes of steps S310 to S330, a feature plane can be set with respect to every contour variation amounting to the threshold T.

<Process accompanying Change in Layer Thickness>

The information processing apparatus 20 refers to the layer thickness of each layer upon determining print data to be used upon forming layers of an object. That is, the information processing apparatus 20 determines appropriate values for the contour, the filling path within the contour, and the material discharge amount based on the layer thickness of each layer so that the cross-sectional shape of the contour and the interior of the contour may be appropriately filled.

When the layer thickness is fixed, the layer thickness could be used as a fixed parameter, and as such, the information processing apparatus 20 does not have to control the layer thickness with respect to each slice data. However, when the layer thickness is variable as in the present embodiment, the layer thickness of each layer can vary depending on the slice data, and the information processing apparatus 20 has to manage layer thickness information for each slice data.

Thus, the print data generation unit 26 generates appropriate print data for each layer thickness by referring to the slice position table such as the above Table 4.

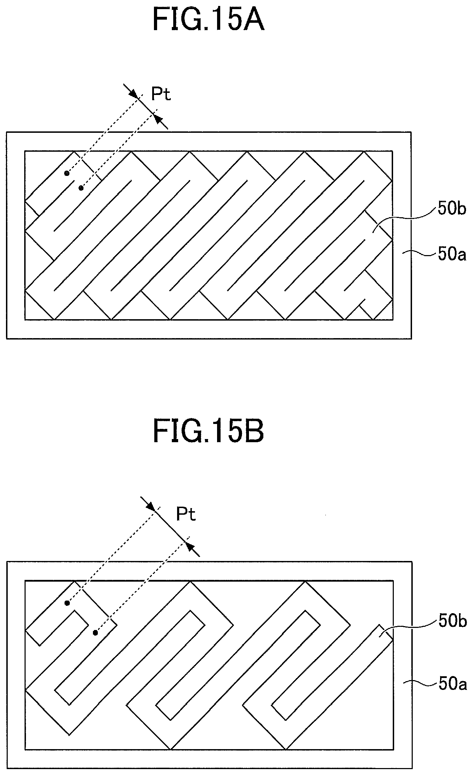

FIGS. 15A and 15B are diagrams illustrating examples of print data generated according to varying layer thicknesses. For example, the additive manufacturing apparatus 70 implementing the FDM system manufactures an object by discharging material from the discharge nozzles 115 that moves back and forth within the contour of a cross-sectional shape. FIG. 15A illustrates a filling path within a contour 50a at a filling rate of 100%. FIG. 15B illustrates a filling path within the contour 50a at a filling rate of about 50%.

In the case where the layer thickness is relatively thick, the filling rate is preferably set higher as compared with the case where the layer thickness is relatively thin in order to maintain the strength of the manufactured object. The filling rate is controlled by the distance to be traveled by the discharge nozzles 115 when the direction of the filling path changes 180 degrees (hereinafter referred to as "turn pitch Pt"). The print data generation unit 26 may change the turn pitch Pt according to the layer thickness.

Alternatively, the print data generation unit 26 may change the material discharge amount while keeping the turn pitch Pt constant. As with the filling rate described above, when the layer thickness is relatively thick, the print data generation unit 26 may control the material discharge amount to be larger as compared with the case where the layer thickness is relatively thin in order to maintain the strength of the manufactured object. Also, in some embodiments, the print data generation unit 26 may be configured to control (change) both the return pitch Pt and the material discharge amount according to the layer thickness, for example.

With respect to the contour 50a, the filling path of the discharge nozzles 115 may be the same irrespective of the layer thickness. However, the print data generation unit 26 may control the material discharge amount to be larger in the case where the layer thickness is relatively thick as compared with the case where the layer thickness is relatively thin.

Specifically, for example, a table associating a layer thickness with a corresponding turn pitch Pt and material discharge amount for each of a contour and a filling section may be prepared. The print data generation unit 26 may determine the turn pitch Pt and the material discharge amount for a contour and a filling section according to the layer thickness by referring to such a table.

As described above, according to an aspect of the present embodiment, even if the layer thickness is variable, appropriate print data can be generated according to the layer thickness.

<Other Application Examples>

Although the present invention has been described above with reference to certain illustrative embodiments, the present invention is not limited to these embodiments, and numerous variations and modifications may be made without departing from the scope of the present invention.

For example, in the above-described embodiment, resin or metal in liquid form is used as the material of the layers. However, the additive manufacturing apparatus 70 can also manufacture an object by discharging cells of humans, animals, plants, and the like. For example, the additive manufacturing apparatus 70 may be configured to create an organ or a cell sheet using cells as the material.

Also, note that the functional configuration illustrated in FIG. 7 is merely one example configuration in which functions of the information processing apparatus 20 are divided into process units in order to facilitate understanding of the process operations of the information processing apparatus 20. The present invention is not limited by such division of the process units. A process of the information processing apparatus 20 can be divided into further process units according to processing details and one process unit may be divided into further detailed processes.

Further, in some embodiments, one or more functions of the information processing apparatus 20 may be implemented by the additive manufacturing apparatus 70, for example.

Note that the feature plane determination unit 23 is an example of a shape change detection unit, the slice position determination unit 24 is an example of a cross-sectional shape generating position determination unit, the slice unit 25 is an example of a cross-sectional shape generation unit, the print data generation unit 26 is an example of a generation unit, a feature plane is an example of shape changing coordinates, and the layer thickness is an example of a predetermined height. The process operations performed by the information processing apparatus 20 described in the present embodiment is an example of an information processing method.

**Claims**

1. An information processing apparatus (20) configured to provide data for manufacturing an object to an additive manufacturing apparatus (70) that manufactures the object by layering a material based on a cross-sectional shape of the object, the information processing apparatus (20) being **characterized by** comprising:

   a shape change detection unit (23) for detecting a shape change coordinate at which a shape of the object changes based on data relating to the shape of the object;
   a cross-sectional shape generating position determination unit (24) for determining a height at which the cross-sectional shape of the object is to be generated such that the height includes the shape change coordinate; and
   a cross-sectional shape generation unit (25) for generating the cross-sectional shape of the object at the height determined by the cross-sectional shape generating position determination unit (24).

2. The information processing apparatus (20) according to claim 1, wherein
   the data relating to the shape of the object includes coordinates of a vertex of a surface of the object to be manufactured; and
   the shape change detection unit (23) determines a coordinate in a height direction from among the coordinates of the vertex of the surface as the shape change coordinate.

3. The information processing apparatus (20) according to claim 1, wherein
   the shape change detection unit (23) generates the cross-sectional shape of the object at each predetermined height of the object based on the data relating to the shape of the object to be manufactured, converts the cross-sectional shape at each predetermined height into image data, determines whether the image data generated for a first predetermined height and the image data generated for an adjacent predetermined height are different, and determines the first predetermined height as the shape change coordinate when the image data generated for the first predetermined height and the image data generated for the adjacent predetermined height are different.

4. The information processing apparatus (20) according to claim 2, wherein
the cross-sectional shape generating position determination unit (24) generates contour data of the cross-sectional shapes of the object at a first shape change coordinate and a second shape change coordinate that are adjacent to each other in the height direction, determines whether a difference ($\Delta$Diff) between the contour data at the first shape change coordinate and the contour data at the second shape change coordinate is greater than or equal to a threshold (T), and determines to generate at least one more cross-sectional shape of the object between the first shape change coordinate and the second shape change coordinate when the difference ($\Delta$Diff) is greater than or equal to the threshold (T).

5. The information processing apparatus (20) according to claim 4, wherein
when the difference between the contour data at the first shape change coordinate and the contour data at the second shape change coordinate is greater than or equal to the threshold (T), the cross-sectional shape generating position determination unit (24) calculates a threshold height (P) at which a contour change equal to the threshold (T) occurs based on a contour change per unit height ($\Delta$Contour) of the contour data, and determines to generate the at least one more cross-sectional shape of the object at every threshold height (P) between the first shape change coordinate and the second shape change coordinate.

6. The information processing apparatus (20) according to any one of claims 1-5, wherein
the cross-sectional shape generating position determination unit (24) determines whether a provisional coordinate (S'), which is obtained by adding a fixed height to the height at which the cross-sectional shape of the object is to be generated, is greater than the shape change coordinate, and determines the shape change coordinate to be a next height at which the cross-sectional shape of the object is to be generated when the provisional coordinate (S') is greater than the shape change coordinate.

7. The information processing apparatus (20) according to any one of claims 1-6, wherein
the cross-sectional shape generating position determination unit (24) determines a difference between the shape change coordinate and the height at which the cross-sectional shape is to be generated that is less than the shape change coordinate, determines whether the difference is less than a layer thickness lower limit of the additive manufacturing apparatus, and corrects the height at which the cross-sectional shape is to be generated that is less than the shape change coordinate to a value obtained by subtracting the layer thickness lower limit from the shape change coordinate when the difference is less than the layer thickness lower limit.

8. The information processing apparatus (20) according to any one of claims 1-7, further comprising:

a generation unit (26) for determining a layer thickness of the material to be layered by the additive manufacturing apparatus (70) based on the height of the cross-sectional shape determined by the cross-sectional shape generating position determination unit (24), and generating layering data for layering the material at the determined layer thickness and shaping the material into the cross-sectional shape based on the determined layer thickness.

9. An additive manufacturing system (1) comprising an additive manufacturing apparatus (70) that manufactures an object by layering a material based on a cross-sectional shape of the object and an information processing apparatus (20), the additive manufacturing system (1) being **characterized by** comprising:

a shape change detection unit (23) for detecting a shape change coordinate at which a shape of the object changes based on data relating to the shape of the object;
a cross-sectional shape generating position determination unit (24) for determining a height at which the cross-sectional shape of the object is to be generated such that the height includes the shape change coordinate; and
a cross-sectional shape generation unit (25) for generating the cross-sectional shape of the object at the height determined by the cross-sectional shape generating position determination unit (24).

10. An information processing method that is implemented by an information processing apparatus (20) configured to provide data for manufacturing an object to an additive manufacturing apparatus (70) that manufactures that object by layering a material based on a cross-sectional shape of the object, the information processing method being **characterized by** comprising steps of:

detecting a shape change coordinate at which a shape of the object changes based on data relating to the shape of the object;
determining a height at which the cross-sectional shape of the object is to be generated such that the height includes the shape change coordinate; and
generating the cross-sectional shape of the object at the determined height.

# FIG.1

500A

# FIG.2A

# FIG.2B

# FIG.3A

# FIG.3B

# FIG.4

<u>1</u>

# FIG.5

# FIG.6A

FIG.6B

~70

~100

CONTROL UNIT

| X-AXIS POSITION DETECTION MECHANISM | ~111 |
| X-AXIS DRIVE MECHANISM | ~101 |
| Y-AXIS POSITION DETECTION MECHANISM | ~112 |
| Y-AXIS DRIVE MECHANISM | ~102 |
| Z-AXIS POSITION DETECTION MECHANISM | ~113 |
| Z-AXIS DRIVE MECHANISM | ~123 |
| STAGE HEATING UNIT | ~105 |
| FILAMENT SUPPLY UNIT | ~106 |
| CHAMBER HEATER | ~107 |
| APPARATUS COOLING DEVICE | ~108 |
| HEAD HEATING UNIT | ~114 |

FIG.7

# FIG.8A

# FIG.8B

```
G1 X10 Y10 F600
G1 X20 Y10 E5 F600
```

## FIG.9A

## FIG.9B

# FIG.10

```
                    ┌──────────────┐
                    │    START     │
                    └──────┬───────┘
                           │            ╭─S10
        ┌──────────────────▼──────────────────┐
        │   SLICE 3D MODEL AT PREDETERMINED    │
        │   LAYER THICKNESS & GENERATE SLICE   │
        │     IMAGES OF ENTIRE 3D MODEL        │
        └──────────────────┬──────────────────┘
                           │            ╭─S20
        ┌──────────────────▼──────────────────┐
        │   COMPARE EACH PAIR OF SLICE IMAGES  │
        │        WITH CONSECUTIVE IDS          │
        └──────────────────┬──────────────────┘
                           │            ╭─S30
                           ▼                         YES
              ◇─────────────────────────◇──────────┐
               ◇    EXACT MATCH?        ◇           │
                 ◇─────────────────────◇            │
                           │                        │
                          NO                         │
                           │            ╭─S40        │
        ┌──────────────────▼──────────────────┐     │
        │  DETERMINE Z COORDINATE OF SLICE     │     │
        │  IMAGE WITH SMALLER ID AS Z          │     │
        │  COORDINATE OF FEATURE PLANE         │     │
        └──────────────────┬──────────────────┘     │
                           │◄───────────────────────┘
                    ┌──────▼───────┐
                    │     END      │
                    └──────────────┘
```

FIG.11

```
        ┌─────────────┐
        │    START    │
        └──────┬──────┘
               │              ╱S110
    ┌──────────┴─────────────┐
    │ CALCULATE NEXT PROVISIONAL│
    │ SLICE POSITION S' AT FIXED│
    │     LAYER THICKNESS       │
    └──────────┬─────────────┘
               │              ╱S120
            HEIGHT OF              YES
         3D MODEL ≧ S' ?  ──────────────┐
               │                        │
              NO                        │        ╱S130
               │              Z COORDINATE          NO
               │         LESS THAN S' REGISTERED ──────────┐
               │            IN FEATURE PLANE               │
               │                TABLE?                     │
               │                   │                       │
               │                  YES                      │
               │              ╱S140                    ╱S160
               │   ┌────────────────────────┐  ┌────────────────────────┐
               │   │ DETERMINE Z COORDINATE │  │ DETERMINE PROVISIONAL SLICE│
               │   │ REGISTERED IN FEATURE PLANE│  │ POSITION S' AS THE NEXT SLICE│
               │   │ TABLE AS Z COORDINATE OF│  │ POSITION (REGISTER IN SLICE│
               │   │ NEXT SLICE POSITION (REGISTER│  │   POSITION TABLE)      │
               │   │  IN SLICE POSITION TABLE)│  └────────────────────────┘
               │   └───────────┬────────────┘
               │              ╱S150
               │   ┌────────────────────────┐
               │   │ SET FLAG IN ASSOCIATION WITH│
               │   │ Z COORDINATE REGISTERED IN │
               │   │   FEATURE PLANE TABLE   │
               │   └────────────────────────┘
        ┌──────┴──────┐
        │     END     │
        └─────────────┘
```

30

# FIG.12

500D

550

**FIG.13**

START

DETECT FEATURE PLANES — S210

SORT Z COORDINATES OF FEATURES PLANES IN ASCENDING ORDER → (A, B, C, D···) — S220

EXTRACT PAIR OF COORDINATES (A, B) — S230

S240 — PAIR EXTRACTED?

NO → END

YES →

GENERATE SLICE DATA AT EXTRACTED Z COORDINATES — S250

GENERATE CONTOUR DATA BASED ON SLICE DATA — S260

COMPARE CONTOUR DATA ↓ CALCULATE CONTOUR CHANGE △Diff — S270

S280 — △Diff < THRESHOLD T?

NO → CALCULATE CONTOUR CHANGE PER UNIT HEIGHT △Contour OVER RANGE FROM A TO B — S310

CALCULATE LAYER THICKNESS P AT WHICH CONTOUR CHANGE EQUALS THRESHOLD T BASED ON △Contour — S320

ADD TO FEATURE PLANE TABLE ALL COORDINATES SATISFYING A < A+P × N < B — S330

EXTRACT NEXT PAIR OF COORDINATES
· SUBSTITUTE B FOR A
· SUBSTITUTE NEXT COORDINATE FOR B — S340

YES →

DELETE COORDINATE B FROM FEATURE PLANE TABLE — S290

EXTRACT NEXT PAIR OF COORDINATES
· LEAVE A AS IS
· SUBSTITUTE NEXT COORDINATE FOR B — S300

END

# FIG.14

# FIG.15A

# FIG.15B

Europäisches
Patentamt

European
Patent Office

Office européen
des brevets

# EUROPEAN SEARCH REPORT

Application Number

EP 17 16 0218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP H08 156108 A (MATSUSHITA ELECTRIC IND CO LTD) 18 June 1996 (1996-06-18) * the whole document * | 1-5,7-10 | INV. B33Y50/02 |
| X | US 2015/328839 A1 (WILLIS KARL [US] ET AL) 19 November 2015 (2015-11-19) * abstract * * claims 1,2; figure 4 * | 1-10 | |

TECHNICAL FIELDS SEARCHED (IPC)

B33Y

The present search report has been drawn up for all claims

| Place of search | Date of completion of the search | Examiner |
|---|---|---|
| Berlin | 27 July 2017 | Bernas, Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 0218

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2017

| Patent document cited in search report | Publication date | Patent family member(s) | Publication date |
|---|---|---|---|
| JP H08156108 A | 18-06-1996 | NONE | |
| US 2015328839 A1 | 19-11-2015 | NONE | |

For more details about this annex : see Official Journal of the European Patent Office, No. 12/82

EPO FORM P0459

**EP 3 219 491 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8156108 B